# EUROPEAN PATENT APPLICATION

(11) **EP 1 462 947 A2**
(43) Date of publication of application: **29.09.2004**
(21) Application number: 04005283.9
(22) Date of filing: 05.03.2004
(51) Int. Cl.: G06F 17/21

(54) **Computer supported plate making method**

(30) Priority: 11.03.2003 JP 2003064612
(71) Applicant: Tadashi OBA, Sendai-shi, Miyagi-ken (JP)
(72) Inventor: Tadashi OBA, Sendai-shi, Miyagi-ken (JP)
(74) Representative: Jacoby, Georg

(57) **Abstract**

According to the present invention, a computer supported plate making method includes: a coordinate layout numbering step, based on an original document or an instruction received from a client, of allocating for a page creation area screen the location and the size of character data and/or image data, which are represented by specific blocks using absolute coordinates, and of adding layout numbers to corresponding character data and/or image data; a character data input step of entering the character data to which the layout number has been added, and of creating, for each of the blocks represented by the absolute values, a file that includes information for a font type, a printing color and a size (Q's); and an image data input step of reading the image data to which the layout number has been added and defining the image data as files corresponding to the layout numbers, whereby, based on proofread letters, a correction is performed for each of the files.

The layout forming and the entry and allocation of character data and/or image data are performed accurately, and the correction and inspection operations performed in accordance with the succeeding proo freading can be s implif ied, so that the processing time can be reduced.

## Description

### BACKGROUND OF THE INVENTION

### Field of the Invention

The present invention relates to a computer supported plate making method for making various plates for printing processes such as gravure and offset, under the control of a computer.

### Related Arts

Conventionally, a method for mounting, on block copy backing, a photocomposition that is to be printed on photographic paper is employed to make a plate for a printing process such as gravure or offset. Therefore, the photocomposition must be prepared after the font, the size of a letter measured in "Q's" and the total size of a frame have been correctly determined, so that a great number of processing steps and a great deal of processing time are required. Since computerized photocomposition was developed and has thereafter been employed, another method has become available for entering character information while taking into account the layout of a page; however, computerized phototypographic composing machines are extremely expensive, and only a limited number of operators for them is available.

Recently, hardware and software functions for computers have been developed, making it possible for plate making operations to be totally performed and supported by computers. Included is the presently available DTP (DeskTop Publishing) software, which is based on computer software, such as PostScript and Photoshop (trademarks of Adobe Systems, Inc.), that initially was developed, and which is widely employed both by individuals and professionals.

However, not to mention the personal use of DTP or its use for hobbies, to employ DTP for the plates required for magazine issues or books, a great number of processing steps and a great deal of processing time are required for plate making, for in-house inspections, for client proofreading, for corrections made following the proofreading and for the inspection of photographic negatives, while ordinarily not only is a detailed accuracy requirement set but also an extremely strict deadline.

Therefore, for publishing companies and other clients, it is especially important that the operators and the individuals in charge of the inspections reduce the number of steps and the processing time required for the initial plate making and the proofreading performed by an operator, for the in-house inspections performed by the individuals in charge, for the corrections that are made after the client proofreading has been completed, and for the inspection of photographic negatives.

### SUMMARY OF THE INVENTION

It is one objective of the present invention to provide a computer supported plate making method whereby the layout setup, the entry of character data and/or image data and the allocation process can be accurately performed to prepare plates for various printing processes, such as gravure and offset, and whereby operations such as corrections and inspections, performed after proofreading has been completed, can be simplified, and the processing time can be reduced.

According to the present invention, a computer supported plate making method comprises:
a coordinate layout numbering step, based on an original document or an instruction received from a client, of allocating for a page creation area screen the location and the size of character data and/or image data, which are represented by specific blocks using absolute coordinates, and of adding layout numbers to corresponding character data and/or image data;
a character data input step of entering the character data to which the layout number has been added, and of creating, for each of the blocks represented by the absolute values, a file that includes information for a font type, a printing color and a size (Q's) ; and
an image data input step of reading the image data to which the layout number has been added and defining the image data as files corresponding to the layout numbers,
whereby, based on proofread letters, a correction is performed for each of the files.

According to the computer supported plate making method of the invention, for a correction based on proofreading letters, a file copy of an original file for which a layout number has been provided is corrected, and during the inspection, to easily perform a comparison, the original file and the corrected file copy must merely be superimposed on each other on a corresponding block.

Furthermore, according to the computer supported plate making method of the invention, since the original file and the file copy are displayed in different colors, or are displayed so they are slightly displaced relative to each other, the comparison of the two files superimposed on the display can be more easily performed.

According to the computer supported plate making method of the invention, the character data and/or the image data, such as photographs and illustrations, are employed as layers of different files for the individual blocks, and for each individual block, are positioned by using absolute coordinates. Further, the character data and the image data are formed as individual files. Therefore, one digitized file that includes the character or image data is correlated with one block designated by the absolute coordinates, and operations such as the layout and the entry and correction of the character data, and/or the image data, can be performed without errors.

In addition, the data entered in each block is formed as an independent file for which an inherent number is provided. Therefore, only the file copy need be corrected, based on the proofread letters, while the original file remains unchanged, and the two files must only be superimposed and displayed in the pertinent block, so that a correction based on the proofreading and an inspection performed before making a galley proof for the repeated performance of the proofreading can be made accurately. As a result, an error occurring because a file was placed in the wrong layout block, a correction oversight and an erroneous correction can be prevented.

The computer supported plate making method of the invention further comprises:
an allocation step;
a block allocation step of allocating blocks designated by using the absolute addresses;
a galley proof making step;
an incorrect portion display step; and
a confirmation and inspection step. At the allocation step, a layout is determined by allocating previously provided character data and/or image data, such as photographs, illustrations and flowcharts, to the blocks represented by the absolute coordinates in a predesignated page frame.

At the allocation step performed for the blocks designated by the absolute addresses, character data and/or image data for the individual sections of the layout are formed as independent files, and the files can be displayed in corresponding blocks across the entire page area.

At the galley proof making step, a galley proof for an in-house inspection and/or for client proofreading is prepared based on a page for which the allocation step, described above in detail, and the data entry have been completed. At the incorrect portion display step, a file copy for a corresponding original document is corrected in accordance with a galley proof on which corrections have been entered. Then, the original file, wherein there is a blank space following the deletion of an incorrect portion, and the file copy that has been corrected as requested are superimposed on the same screen and displayed using different colors, for example.

At the confirmation and inspection step, the recorrection and the inspection are performedwhile examining the incorrect portion display screen on which the two files are superimposed and displayed. At the final step, after the proofreading has been confirmed, the process is shifted to the plate making step. Since a computer is employed for these individual steps, all the operations described above are performed using computer software. Since there are methods well known to one having ordinary skill in the art that can be applied for the technique employed to use software to perform these various operations, no detailed explanation will be given.

According to the invention, previously "provided character data and/or image data such as photographs and illustrations" are character data specified in the original document or written instructions received from a client, and image data such as photographs, illustrations and flowcharts. These data include not only hard copies and original images, such as photographs, paintings, illustrations and flowcharts, but also data that have already been digitized. Data that have not yet been digitized are entered directly at a keyboard, or are read by appropriate means, such as an OCR, a flatbed or a film scanner, and are converted into a required form and stored.

Further, "character data and/or image data for the individual sections of the layout prepared at the allocation step" designates character data and/or image data provided or instructed by a client, as described above. These data are digitized as independent files for the individual units and inherent numbers are added, and the obtained files are displayed by using different layers.

The "page for which the allocation step has been completed" is a page for which the above described data are formed as independent files, and the layout is completed by correlating the positions designated by the absolute addresses with the files represented by the inherent numbers.

"A galley proof for which corrections are entered" is a galley proof for which corrections are entered by an in-house inspector, a client writer, an editor or another proofreader.

The "incorrect portion display screen on which the two files are superimposed and displayed" is a screen on which the original file, for which the inherent number is provided and wherein there ia a blank space following the deletion of an incorrect portion in accordance with correction instructions entered by a client proofreader, and a file copy wherein the incorrect portion has been copied and corrected are superimposed and displayed in different colors, or while they are slightly displaced relative to each other, so that the corrected portions and the other portions for which no correction is required can be clearly identified.

The "proofreading is confirmed" is the state wherein it is confirmed that the proofreading has been terminated through the issuance of a correction instruction issued by the client, a correction performed by the plate making operator, the in-house inspection, the preparation of the gallery proof for a corrected page, and proofreading performed by a client and/or an in-house inspector.

### BRIEF DESCRIPTION OF THE DRAWINGS

Fig. 1 is a diagram showing an example allocation process screen displayed by a computer supported plate making method according to the present invention;
Fig. 2 is a diagram showing an example screen for a specific example allocation setup step performed in accordance with a client instruction;
Fig. 3 is a diagram showing an example screen in which is shown a correlation between the allocation setup screen and an allocated layer table;
Fig. 4 is a diagram showing an example screen for a character data (name) input step performed after the allocation setup;
Fig. 5 is a diagram showing an example screen for an image (photo) data input step performed after the allocation setup;
Fig. 6 is a diagram showing an example screen for which the input of image (photo) data has been completed;
Fig. 7 is a diagram showing an example screen for a proof correction step window;
Fig. 8 is a diagram showing an example initial screen for a proofread character data (name) correction step window;
Fig. 9 is a diagram showing an example display for a preparation screen for the correction of character data that has been proofread;
Fig. 10 is a diagram showing an example display screen on which the correction is entered for character data (name) that has been proofread; and
Fig. 11 is a diagram showing an example screen on which the original file corresponding to the character data (name) correction performed as result of the proofreading and a file copy that has been corrected are superimposed.

### DETAILED DESCRIPTION OF THE PREFERRED EMBODIMENT

The present invention relates to a computer supported plate making method whereby plates for various printing processes, such as gravure and offset, are prepared under the control of a computer. One embodiment of the present invention will now be described while referring to the accompanying drawings; the present invention, however, is not limited to this embodiment.

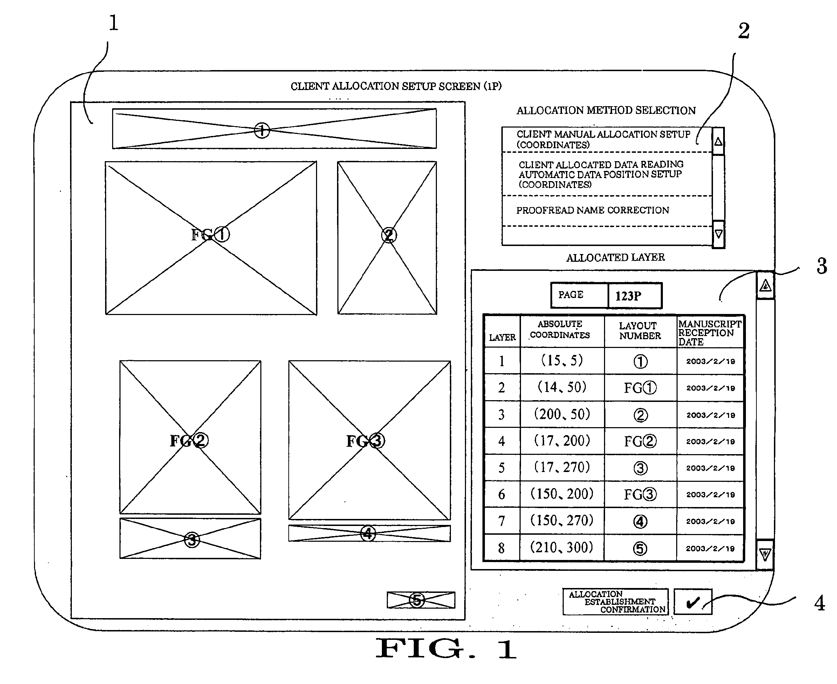

Fig. 1 is a diagram showing an example allocation setup screen. The left half in Fig. 1 is a page creation area 1 for one page for which the allocation has been set up, and the right half in Fig. 1 is an allocation method selection area 2 and an allocated layer display area 3. It should be understood that the arrangement of these areas, the number of pages displayed, the display size, the representation provided in a table and the number of characters are merely examples, and that they do not specify the present invention.

In this embodiment, assume that "client manual allocation setup", according to which the allocation is set up manually in accordance with an instruction entered by a client, such as a publishing company or an editor, is selected in the allocation method selection area 2. When a layout and input method according to the invention is correlated with a client method, the allocation setup may be accepted as "client allocated data" and be automatically read. In the page creation area 1, denoted by ① to ④ are blocks for which character data are allocated, and denoted by FG① to FG③ are blocks for which image data are allocated. These blocks are identified by absolute coordinates.

A specific state of the allocation operation, such as a page number, a layer number, the absolute coordinates of each block, the number allocated to each file and the date on which character data or image data were received, is displayed in the allocated layer area 3. In Fig. 1, the state wherein a page is allocated is identified by examining the page creation area 1, and this is apparent from layer 1 in the table in the allocated layer area 3, wherein the block required for the location and size of the page segment is specified at absolute coordinates (15, 5) in the page area. Further, it can be understood that file 1, allocated for the specific block, is character data ①.

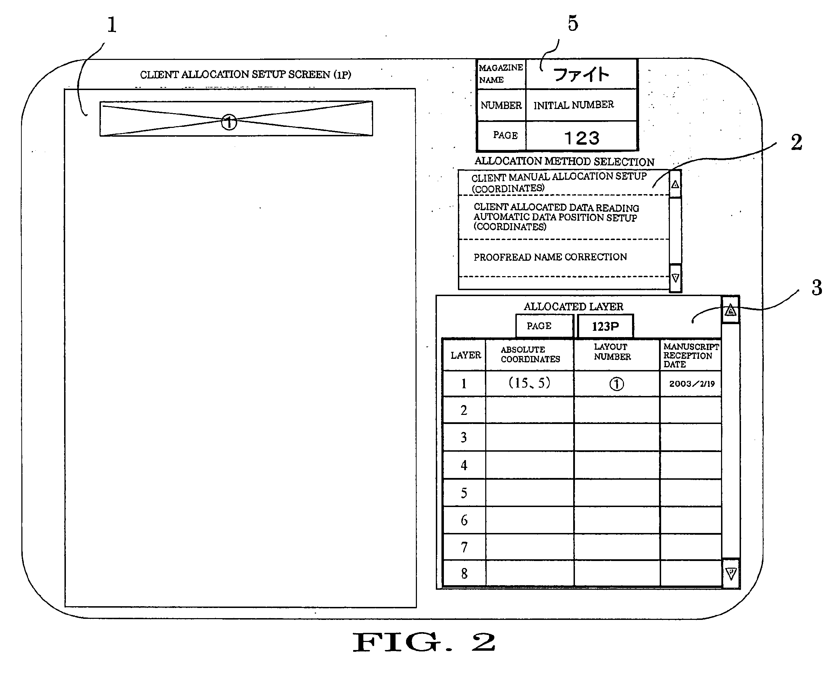

Fig. 2 is a diagram showing that an example screen, displayed for manually allocating page 123 of the initial number of imaginary magazine " 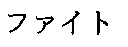 (Fight)", is represented in a creation-subject name area 5. In this example, in accordance with an instruction entered by a client, character data ① is allocated for the block at absolute coordinates (15, 5) in the page creation area 1.

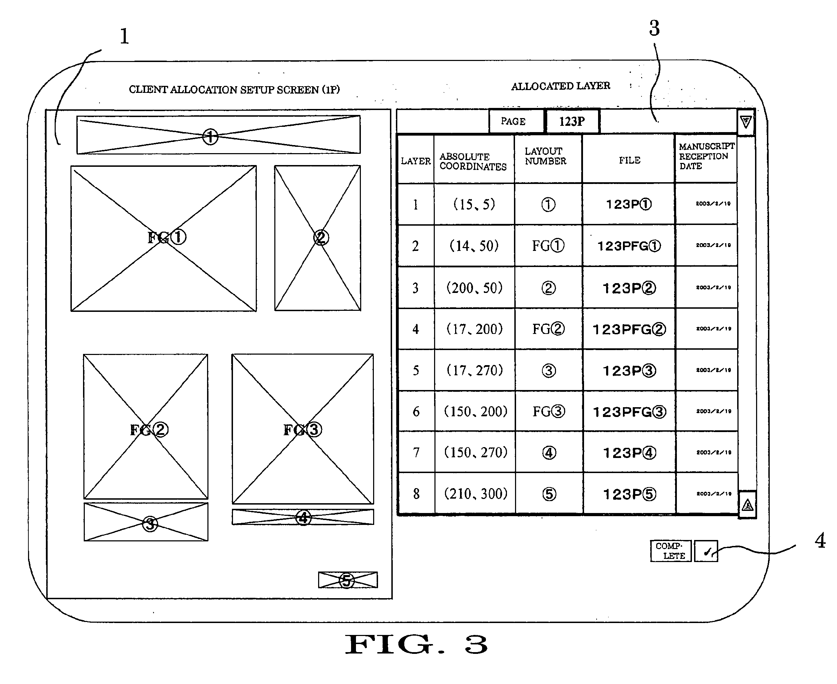

Fig. 3 is a diagram showing the state wherein, for layers 2 to 8, character data and image data are allocated for corresponding blocks at absolute coordinates. When a check mark is entered in a process end confirmation area 4 to confirm all the allocations have been completed, the process is shifted to the next step.

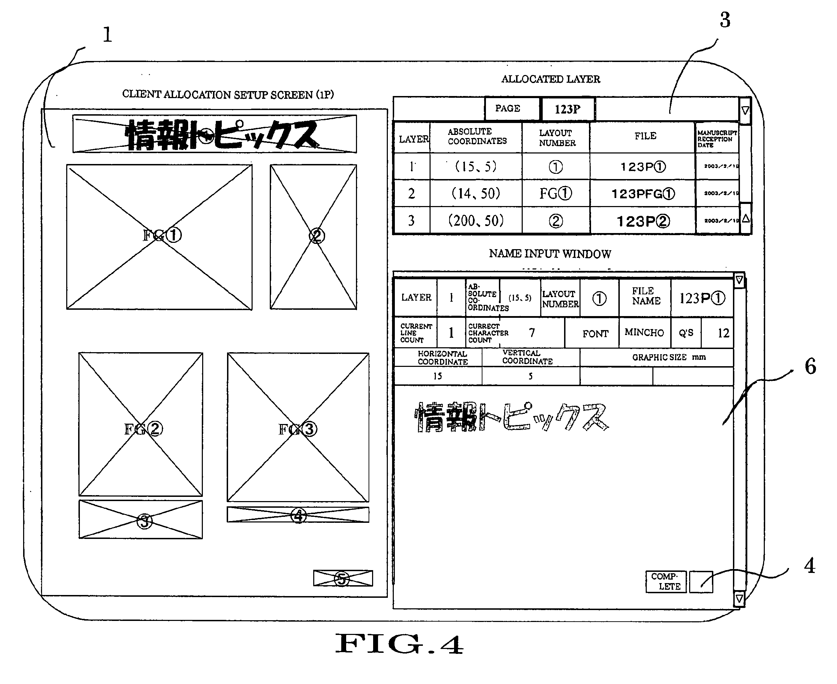

Fig. 4 is a diagram showing the state wherein character data designated as layer 1, i. e., " 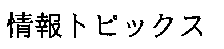 (data topics) ", are entered. Allocated block ① in layer 1 is clicked on, and then, from a name input window 6 opened in the lower right in Fig. 4, character data having a desired font, a desired font color and a desired character size are entered, as file name 123p①, in layout number (block) ① at absolute coordinates (15, 5) in the page creation area 1.

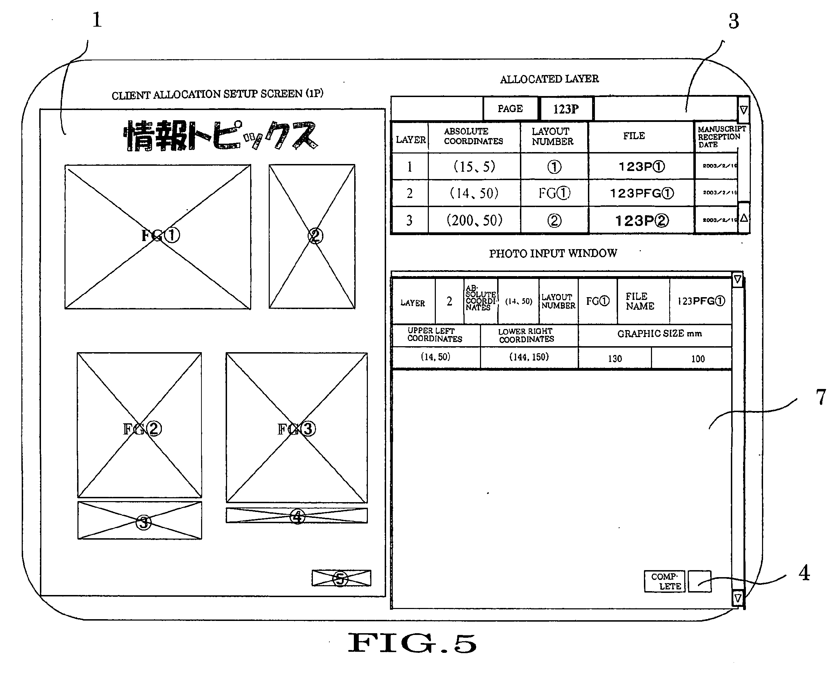

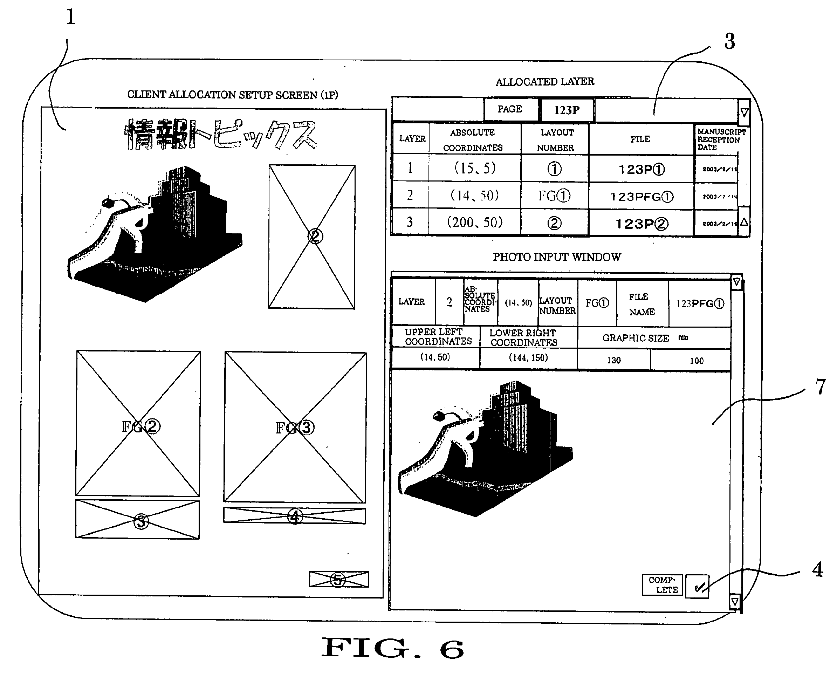

Fig. 5 is a diagram showing the state wherein, following the entry of the character data in the character data layout block ① has been established, the process is shifted to the operation performed for entering data in an image data layout block FG ① at absolute coordinates (14, 50). During the image data input process, either digital image data may be read, or a hard copy may be scanned using ordinary means, and file name 123PFG①, which corresponds to layout number FG ① and layer 2, may be prepared in a photo input window 7. At this time, the size, the tone and the brightness of an image are also adjusted as needed. And when the entry of image data FG ① has been established, as is shown in Fig. 6, sequentially, data entries in character data input area ② may be performed. In this manner, the input of data and the establishment operations required for all the areas may be repeated.

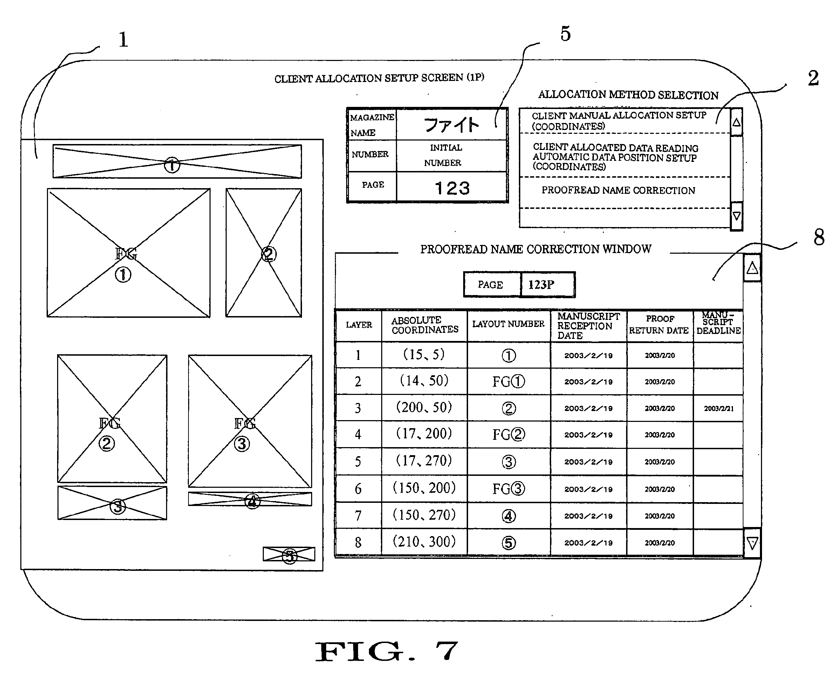

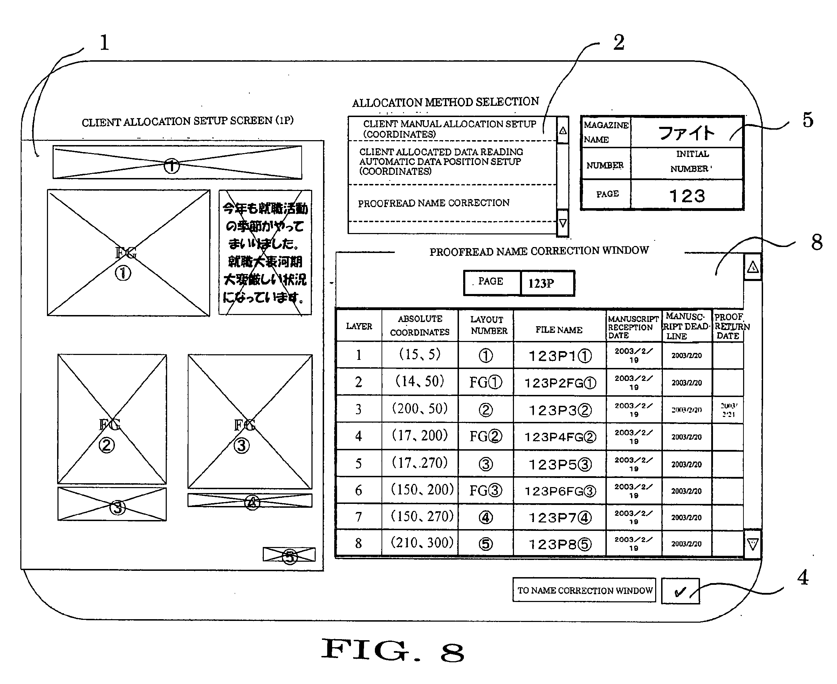

Fig. 7 is a diagram showing an example screen for the correction step that is performed after corrections have entered as a result of the proofreading. A proofread name correction window 8 is opened in the lower right on the screen. And when layout block ② in layer 3 is clicked on, as is shown in Fig. 8, layer 3 in the window 8 is selected and highlighted by hatching, and the contents of a file are displayed in layout block ② in the page creation area 1.

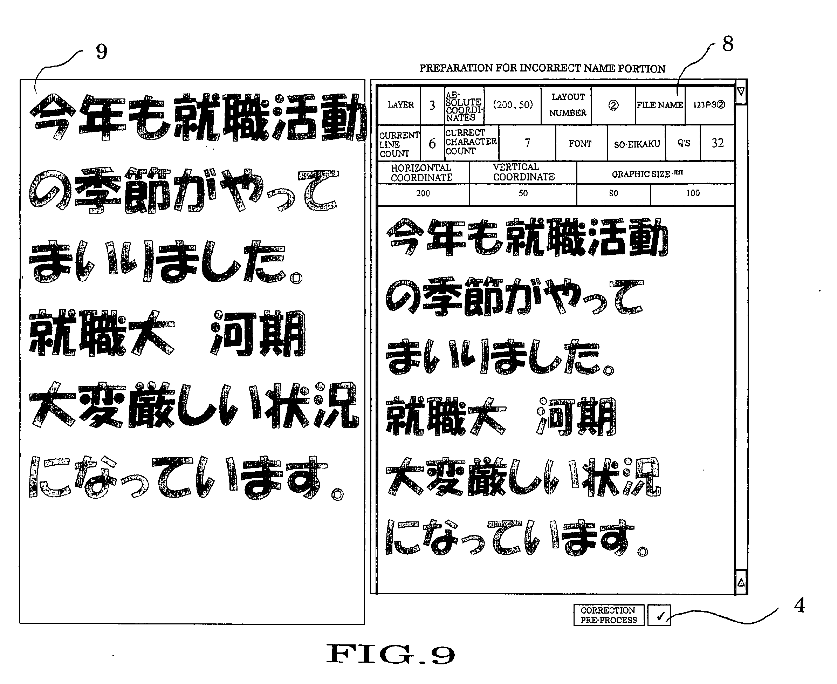

In this example, in the words " 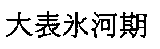 (dai hyogaki)", on the fourth line in the character data layout block ② represented by absolute coordinates (200, 50), an incorrect character has been entered for " 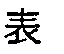 (hyo)". Thereafter, when a selection to correct this error is made, the screen is changed to a preparation screen used for an incorrect portion, as is shown in Fig. 9 (hereinafter the display frame is omitted). Then, after the erroneous character for " 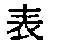 (hyo)" has been deleted in a character data (name) correction window area 8 on the right in Fig. 9, the portion occupied by the character is left blank and all the contents, including the blank, are enlarged and displayed on the screen in an enlarged display area 9 on the left. Subsequently, following the entry of a check mark in the process end confirmation area 4, the process is shifted to the next step.

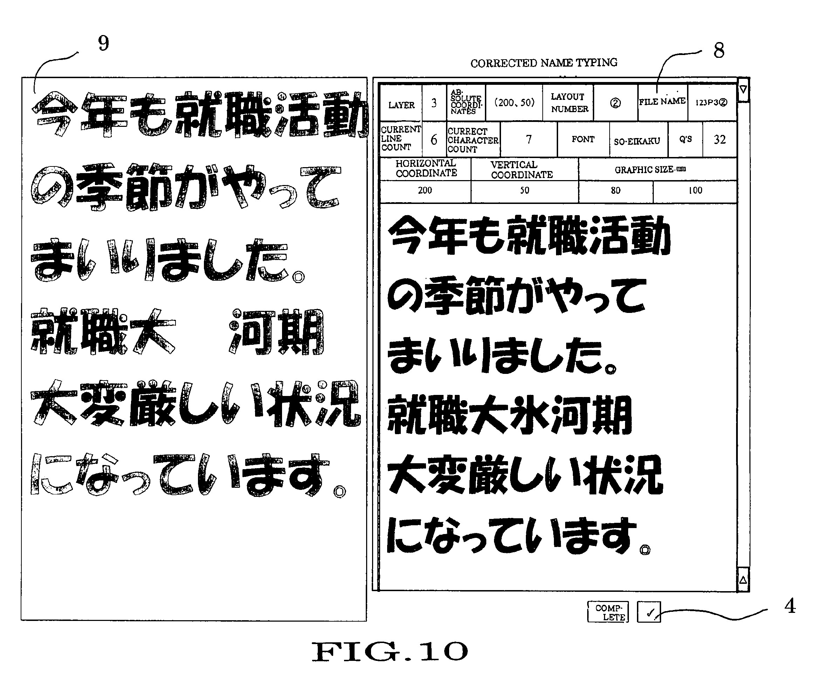

Fig. 10 is a diagram showing the state wherein the correct character for " 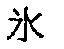 (hyo)" has been entered to replace the erroneous character " 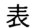 (hyo)" that was deleted. Then, following the entry of a check mark for completion, the contents in the enlarged display area 9 on the left are also changed to reflect the corrected contents (the updated contents are not shown in Fig. 10).

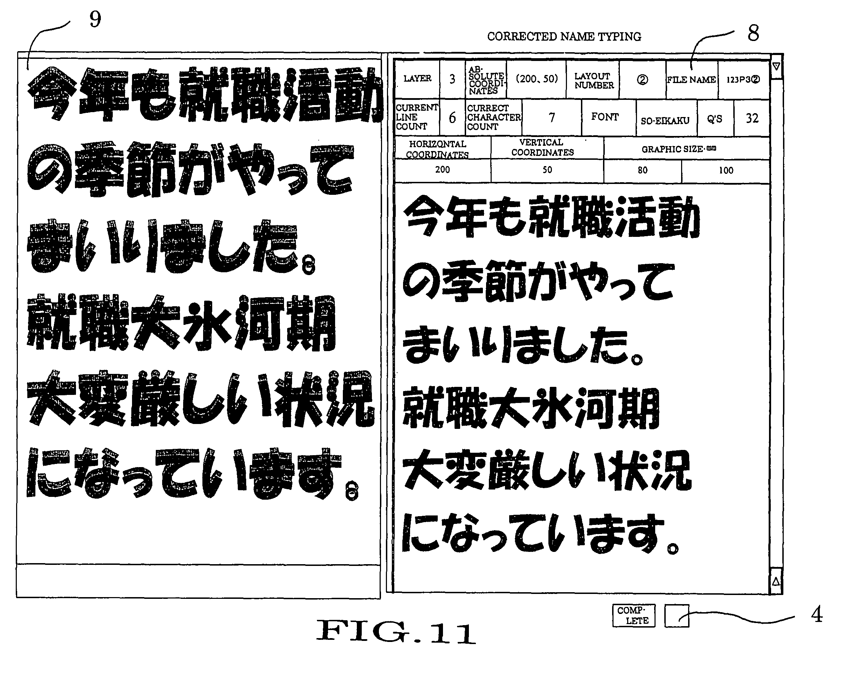

Thereafter, as is shown in Fig. 11, the original file, which contained the incorrect character " 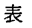 (hyo)" before it was corrected, leaving a blank, and the file copy, wherein the correct character " 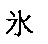 (hyo)" has been entered, are superimposed and displayed while slightly displaced relative to each other. Thus, it can be confirmed, by using a single layer for the file copy, that the portion is displayed wherein the correct character " 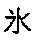 (hyo)" replaced the incorrect character " 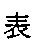 (hyo)", since the uncorrected portion is also displayed and the two files form a double layered display in which the characters are shifted relative to each other. When the two files are displayed using different colors, such as red and blue or red and green, or by using different brightness levels, the corrected and the uncorrected portions can be more easily and clearly identified.

Therefore, whether a correction has been performed based on the proofreading, whether there has been a correction oversight, or whether an erroneous correction was made can be determined extremely easily, and either the in-house or the client inspection can be omitted, or can be extremely simplified.

According to the computer supported plate making method of the invention, the files allocated for individual blocks are provided as independent files for which inherent numbers have been added, and the blocks are correlated with the files. Therefore, all the operations, fromblock allocation to plate making, are simplified, and it is expected that errors at the individual steps will be greatly reduced.

Especially, the correction based on the proofreading is performed for each file, and the corrected contents can be identified by visually comparing the original file with the updated file copy. Therefore, correction errors, correction oversights and erroneous corrections can be easily and visually examined, and the labor and the time required for the inspections can be greatly reduced. Further, this method also very effectively reduces the total of the required publishing expenses.

Various other modes of carrying out the invention are contemplated that are within the scope of the following claims that in particular point out and distinctly describe the subject matter regarded as the invention.

## Claims

1. A computer supported plate making method comprising:
a coordinate layout numbering step, based on an original document or an instruction received from a client, of allocating for a page creation area screen the location and the size of character data and/or image data, which are represented by specif ic blocks us ing absolute coordinates, and of adding layout numbers to corresponding character data and/or image data;
a character data input step of entering the character data to which the layout number has been added, and of creating, for each of the blocks represented by the absolute values, a file that includes information for a font type, a printing color and a size (Q's); and
an image data input step of reading the image data to which the layout number has been added and defining the image data as files corresponding to the layout numbers,
whereby, based on proofread letters, a correction is performed for each of the files.

2. A computer supported plate making method according to claim 1, whereby, for a correction based on proofreading letters, a file copy of an original file for which a layout number has been provided is corrected, and during the inspection, to easily perform a comparison, the original file and the corrected file copy are superimposed on each other on a corresponding block.

3. A computer supported plate making method according to claim 2, whereby, to perform comparison more easily, the original file and the file copy are displayed in different colors.

4. A computer supported plate making method according to claim 2 or 3, whereby, to perform comparison more easily, the original file and the file copy are slightly displaced relative to each other, and are superimposed on each other on display.

5. A computer supported plate making method according to one of claims 1 to 4, whereby the steps of a plate making process, including the coordinate allocation numbering step, the character data input step, the image data input step and the proofreading based correction step, are provided as a computer program.
